**Europäisches Patentamt**

**European Patent Office**

**Office européen des brevets**

(19)

(11) Veröffentlichungsnummer: **0 031 409**
**A2**

# EUROPÄISCHE PATENTANMELDUNG

(12)

(21) Anmeldenummer: 80106359.5

(22) Anmeldetag: 18.10.80

(51) Int. Cl.³: **F 16 L 37/12**

(30) Priorität: 27.12.79 DE 2952468

(43) Veröffentlichungstag der Anmeldung: 08.07.81
Patentblatt 81/27

(84) Benannte Vertragsstaaten: **AT DE FR GB IT NL SE**

(71) Anmelder: **Armaturenfabrik Hermann Voss GmbH & Co.,
D-5272 Wipperfürth (DE)**

(72) Erfinder: **Becker, Bruno, Ing.grad., Lichtinghagen 51,
D-5250 Lindlar (DE)**

(74) Vertreter: **Patentanwälte Dr. Solf & Zapf,
Postfach 13 02 19, D-5600 Wuppertal 1 (DE)**

(54) **Steckbare Verbindungsvorrichtung mit Schnappverschluss.**

(57) Eine steckbare Anschlußvorrichtung, insbesondere für Druckluftsteuerleitungen aus Kunststoff, die aus einem Grundkörper (1) und einem in eine Durchgangsbohrung (2) des Grundkörpers mit seinem Steckerschaft (7) einsteckbaren, umfangsgemäß abgedichteten und arretierten Stecker besteht. Die Arretierung erfolgt mittels eines Schnappverschlusses, dessen eine Verschlußhälfte (3) am Grundkörper (1) außerhalb der Durchgangsbohrung (2) desselben in Verlängerung der Durchgangsbohrung angeordnet und dessen andere Verschlußhälfte (8, 9, 20) mit dem Steckerschaft (7) zumindest kraftschlüssig verbunden ist.

EP 0 031 409 A2

- 1 -

## Steckbare Verbindungsvorrichtung mit Schnappverschluß

Die vorliegende Erfindung betrifft eine steckbare Verbindungsvorrichtung, insbesondere für Druckluftsteuerleitungen aus Kunststoff, bestehend aus einem Grundkörper und einem in eine Durchgangsbohrung des Grundkörpers mit seinem Steckerschaft einsteckbaren, umfangsgemäß abgedichteten und arretierten Stecker.

Die bekannten Steckverbindungen gehen von der Konstruktionsmaßgabe aus, daß ihre wesentlichen Verbindungsteile aus Metall bestehen. Die Metallsteckverbindungen sind aber aufgrund der erforderlichen umfangreichen Bearbeitung der Verbindungsteile relativ teuer in der Herstellung. Darüber hinaus bestehen sie aus vielen Einzelteilen, wodurch sich die Herstellungskosten weiterhin erhöhen, aber auch sich zusätzliche Risiken aufgrund der vielen Teile ergeben.

Der vorliegenden Erfindung liegt die Aufgabe zugrunde, eine steckbare Anschlußvorrichtung zu schaffen, die weitgehendst unter Verwendung von Kunststoff hergestellt werden kann und aus möglichst wenigen kunststoffgerecht konstruierten Einzelteilen besteht.

- 2 -

Erfindungsgemäß wird dies dadurch erreicht, daß die Arretierung mittels eines Schnappverschlusses erfolgt und eine Verschlußhälfte am Grundkörper außerhalb der Durchgangsbohrung in Verlängerung derselben angeordnet ist und die andere Verschlußhälfte mit dem Steckerschaft zumindest kraftschlüssig verbunden ist.

Dabei ist es zweckmäßig, wenn die dem Grundkörper zugeordnete Verschlußhälfte mit diesem materialschlüssig verbunden ist. Alternativ kann es ebenfalls zweckmäßig sein, eine Verbindung durch einen Preßsitz oder durch Verkleben zu erreichen. Diese erfindungsgemäße Ausgestaltung, insbesondere die Wahl eines Schnappverschlusses, berücksichtigt die Eigenschaften des verwendeten Herstellungsmaterials Kunststoff. Denn dieses Material ist einerseits fest genug, um die auftretenden Belastungen aufzunehmen, andererseits aber auch hinreichend biegeelastisch, um in einen Schnappverschluß eingesetzt zu werden. Indem die eine Verschlußhälfte außerhalb der Durchgangsbohrung des Grundkörpers ausgebildet ist, ist eine Bearbeitung der Durchgangsbohrung nicht erforderlich, vielmehr kann diese als einfache Zylinderbohrung verbleiben, so daß sich eine besonders kostengünstige Herstellung ergibt. Auch ermöglicht die Zylinderbohrung eine einfache Abdichtung, und zwar vorzugsweise durch eine bekannte O-Ring-Dichtung.

Zudem besteht die erfindungsgemäße Anschlußvorrichtung entweder lediglich aus zwei oder aus drei Verschlußteilen, und zwar abhängig davon, ob die dem Steckerschaft zugeordnete Verschlußhälfte mit diesem lediglich kraftschlüssig oder auch materialschlüssig verbunden ist, wobei beide alternativen Ausführungsformen möglich sind.

Der Grundkörper selbst kann aus einem Spritzgußteil, z. B. aus einer Aluminiumlegierung, oder aus einem Kunststoffteil bestehen, wobei es dann ohne weiteres fertigungstechnisch möglich ist, die ihm zugeordnete Verschlußhälfte mit anzuformen. Weitere vorteilhafte Ausführungsformen der Erfindung sind in den Unteransprüchen 5 bis 12 enthalten.

Anhand der in den beiliegenden Zeichnungen dargestellten Ausführungsbeispiele wird die Erfindung näher erläutert. Es zeigen:

Fig. 1 eine Ansicht einer ersten Ausführungsform einer erfindungsgemäßen Anschlußvorrichtung, zum Teil geschnitten,

Fig. 2 eine Ansicht einer weiteren Ausführungsform der erfindungsgemäßen Anschlußvorrichtung, zum Teil geschnitten.

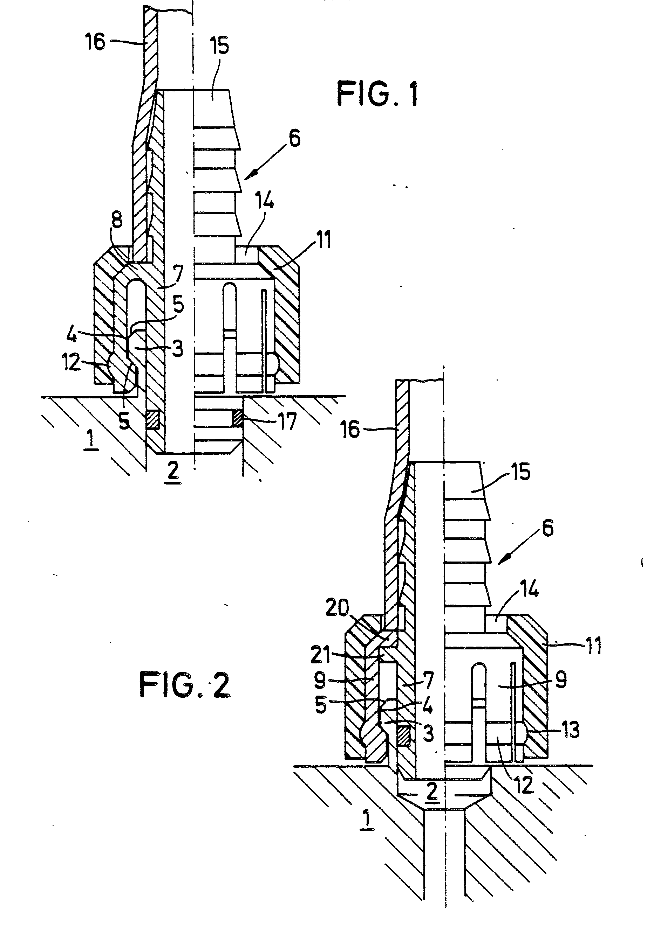

In Fig. 1 ist eine Ausführungsform der erfindungsgemäßen Anschlußvorrichtung dargestellt, die aus einem Grundkörper 1, z. B. einem Ventilgehäuse, besteht, der als Spritzguß- oder Kunststoffteil ausgebildet sein kann. Als Herstellungsmaterial kann bei der Spritzgußherstellung eine AL-Legierung verwendet werden. In dem Grundkörper 1 befindet sich mindestens eine zylindrische Durchgangsbohrung 2. Um die Eintrittsöffnung der Durchgangsbohrung ist ein zylindrischer Kragen 3 als eine Hälfte eines Schnappverschlusses angeordnet, der materialschlüssig mit dem Grundkörper 1 ist. Im dargestellten Beispiel ist der Kragen 3 einstückig mit dem Grund-körper 1 hergestellt.

Der Kragen 3 weist an seinem äußeren Umfang im Bereich seines freien Endes eine Ringwulst 4 auf. Die Seitenflächen 5 der Ringwulst 4 sind dabei abgeschrägt. In Fig.1 ist die erfindungsgemäße Anschlußvorrichtung im arretierten Zustand eines Steckers 6 in der Durchgangsbohrung 2 gezeigt. Hierzu ist der Steckerschaft 7 in die Durchgangsbohrung 2 durch den Kragen 3 hindurch eingesteckt. Am Steckerschaft 7 sind materialschlüssig, insbesondere einstückig mit diesem, ausgehend von einem Ringbund 8, in gewissem Abstand parallel zum Steckerschaft 7 mehrere Federarme 9 ausgebildet. Diese Federarme 9 sind jeweils gleich weit voneinander entfernt. Die freien Enden der Federarme 9 zeigen in Richtung auf den Kragen 3. Der Abstand der Federarme 9 vom Steckerschaft 7 entspricht etwa der Dicke des Kragens 3 im Bereich der Ringwulst 4. Endseitig sind die Federarme 9 hakenförmig auf den Steckerschaft 7 zu abgewinkelt. Mit dieser Abwinklung 10 hintergreifen sie die Ringwulst 4 im eingesetzten Zustand des Steckerschaftes 7, so daß damit eine Art Schnappverschluß gebildet wird. Mittels einer Haltehülse 11, die von hinten über die Federarme geschoben ist, werden die Federarme 9 radial festgelegt, so daß ein Auseinanderspreizen derselben verhindert wird. Die axiale Sicherung der Haltehülse 11 erfolgt mittels auf der Außenseite der Federarme 9 angeformter Schnappwülste 12, die in eine Ringnut 13 in der Innenseite der Haltehülse 11 einrasten, wenn die Haltehülse sich in ihrer Endstellung befindet.

Die Haltehülse 11 weist in ihrem Boden eine Öffnung 14 auf, durch die der Steckerschaft 7 verläuft und die derart bemessen ist, daß ein auf einen Anschlußstutzen 15 des Steckers aufgeschobenes Kunststoffrohr 16, vorzugs-

0031409

- 5 -

weise aus Polyamid, hindurchpaßt. Die Haltehülse 11 ist zweckmäßigerweise aus einem Polyamid hoher Festigkeit gefertigt, und der Stecker besteht aus Polyacetal, wobei insbesondere glasfaserverstärkte Kunststoffmaterialien verwendet werden.

Die Abdichtung des Steckerschaftes 7 in der Durchgangsbohrung 2 erfolgt mit einem O-Ring 17, der in einer Nut im Endbereich des Steckerschaftes angeordnet ist. Damit weist die erfindungsgemäße Anschlußvorrichtung den Vorteil auf, daß lediglich ein Dichtelement erforderlich ist, um eine Abdichtung zu erzeugen. Im gezeigten Ausführungsbeispiel wird der Steckerschaft relativ tief in die Durchgangsbohrung 2 des Grundkörpers 1 eingesteckt, so daß ein relativ langer Steckerschaft 7 erforderlich ist und die O-Ring-Dichtung außerhalb des Bereichs der Federarme 9 liegt. Diese Anordnung der O-Ring-Dichtung ermöglicht die einstückige Ausführung der Federarme 9 mit dem Stecker 6.

In Fig. 2 ist eine weitere Ausführungsform der erfindungsgemäßen Vorrichtung dargestellt. Bei dieser sind gleiche Teile wie in Fig. 1 mit denselben Bezugsziffern versehen. Im Unterschied zur Ausführungsform gemäß Fig. 1 sind die Federarme 9 nicht einstückig mit dem Steckerschaft 7 ausgebildet, sondern sie stellen mit einem ihnen gemeinsamen Basisring 20 ein getrenntes Teil des Schnappverschlusses dar. Als Anlage für den Basisring 20 dient ein am Steckerschaft 7 ausgebildeter umlaufender Ansatz 21. Diese Zweiteiligkeit von Federarmen und Steckerschaft ist deshalb erforderlich, weil der Steckerschaft relativ kurz ist und die O-Ring-Dichtung innerhalb des von den Armen umschlossenen Raumes liegt, so daß ein einteiliges Verspritzen wegen auftretender Entformungsschwierigkeiten nicht möglich wäre. Die kurze Ausführung des Steckerschaftes 7 ist im dargestellten Beispiel deshalb notwendig, weil die Durchgangsbohrung 2 sich unmittelbar hinter ihrer Öffnung verengt.

Der Basisring 20 kann dadurch in seiner Lage fixiert werden, daß er zwischen dem Ansatz 21 und dem Ende des Rohres 16 eingeklemmt wird oder dadurch, daß er mit dem Ansatz 21 verklebt oder verschweißt wird. Die bei beiden Ausführungsformen der Fig. 1 und 2 verwendete Haltehülse ist in beiden Anwendungsfällen gleich, wobei sie die Verbindung sichert und gleichzeitig auch die gesamte Anschlußvorrichtung vor Verschmutzung schützt. Für den Fall, daß die erfindungsgemäße Anschlußvorrichtung bei bereits vorhandenen Gehäusen mit Gewindeanschlußbohrungen verwendet werden soll, kann das Kragenteil auch als Adapter ausgeführt sein, wobei sich an den Kragen selbst ein Gewindeabschnitt anschließen würde, mit dem der Kragen dann am Gehäuse befestigt würde.

- 1 -

Ansprüche:

1. Steckbare Anschlußvorrichtung, insbesondere für Druckluftsteuerleitungen aus Kunststoff, bestehend aus einem Grundkörper und einem in eine Durchgangsbohrung des Grundkörpers mit seinem Steckerschaft einsteckbaren, umfangsgemäß abgedichteten und arretierten Stecker, d a d u r c h g e k e n n z e i c h n e t, daß die Arretierung mittels eines Schnappverschlusses erfolgt und eine Verschlußhälfte (3) am Grundkörper (1) außerhalb der Durchgangsbohrung (2) desselben in Verlängerung der Durchgangsbohrung angeordnet und die andere Verschlußhälfte (8, 9, 20) mit dem Steckerschaft (7) zumindest kraftschlüssig verbunden ist.

2. Anschlußvorrichtung nach Anspruch 1, d a d u r c h g e k e n n z e i c h n e t, daß die dem Grundkörper (1) zugeordnete Verschlußhälfte (3) mit diesem materialschlüssig verbunden ist.

3. Anschlußvorrichtung nach Anspruch 1, d a d u r c h g e k e n n z e i c h n e t, daß die Verschlußhälfte (3) mit dem Grundkörper (1) durch einen Preßsitz verbunden ist.

4. Anschlußvorrichtung nach Anspruch 1, d a d u r c h   g e k e n n z e i c h n e t , daß die Verschluß-hälfte (3) mit dem Grundkörper (1) durch eine Klebeverbindung verbunden ist.

5. Anschlußvorrichtung nach einem oder mehreren der Ansprüche 1 bis 4, d a d u r c h   g e k e n n -z e i c h n e t , daß die dem Stecker (6) zugeordnete Verschlußhälfte (8, 9) materialschlüssig mit dem Steckerschaft (7) verbunden ist.

6. Anschlußvorrichtung nach einem oder mehreren der Ansprüche 1 bis 5, d a d u r c h   g e k e n n -z e i c h n e t , daß die Durchgangsbohrung (2) zylindrisch ausgebildet ist.

7. Anschlußvorrichtung nach einem oder mehreren der An-sprüche 1 bis 6, d a d u r c h   g e k e n n -z e i c h n e t , daß die am Grundkörper (1) angeordnete Verschlußhälfte aus einem zylinderförmigen Kragen (3) besteht, an dessen freien Ende an der Außenfläche eine Ringwulst (4) ausgebildet ist.

8. Anschlußvorrichtung nach einem oder mehreren der An-sprüche 1 bis 7, d a d u r c h   g e k e n n -z e i c h n e t , daß die mit dem Steckerschaft (7) verbundene Verschlußhälfte aus in einem gewissen Abstand zum Steckerschaft parallel verlaufenden, auf einem gemeinsamen Verbindungsring (8, 20) angeformten, an ihren freien Enden hakenförmig ausgebildeten Federarmen (9) bestehen, die hinter der Ringwulst (4) mit ihren freien hakenförmigen Enden im Verbindungsfall einhaken.

9. Anschlußvorrichtung nach einem oder mehreren der Ansprüche 1 bis 8, d a d u r c h g e k e n n - z e i c h n e t, daß die Federarme im zusammengesteckten Zustand der Verbindung von einer Haltehülse (11) radial umschlossen werden, die von hinten über die Federarme (9) aufgeschoben ist.

10. Anschlußvorrichtung nach Anspruch 9, d a d u r c h g e k e n n z e i c h n e t, daß die Haltehülse (11) im Bereich ihres freien Endes an ihrer Innenseite eine Ringnut (13) aufweist, in die an den Außenflächen der Federarme im Bereich ihrer freien Enden angeformte Schnappwülste (12) einrasten.

11. Anschlußvorrichtung nach Anspruch 9 oder 10, d a - d u r c h g e k e n n z e i c h n e t , daß die Haltehülse (11) eine Öffnung (14) mit einem derartigen Durchmesser aufweist, daß der Anschlußstutzen (15) mit einem aufgeschobenen Rohr (16) durch die Öffnung verlaufen kann.

12. Anschlußvorrichtung nach einem oder mehreren der Ansprüche 1 bis 11, d a d u r c h g e k e n n - z e i c h n e t, daß die Abdichtung mittels eines im Steckerschaft angeordneten O-Rings (17) erfolgt.

13. Anschlußvorrichtung nach einem oder mehreren der Ansprüche 1 bis 12, d a d u r c h g e k e n n - z e i c h n e t, daß am Steckerschaft ein umlaufender Ansatz (21) ausgebildet ist, gegen den sich ein die Federarme (9) tragender Basisring (20) anlegt.

0031409

- 4 -

14. Anschlußvorrichtung nach einem oder mehreren der Ansprüche 1 bis 13, d a d u r c h   g e k e n n - z e i c h n e t, daß der Stecker (6), die Federarme (9) und die Haltehülse (11) aus einem glas- faserverstärkten Kunststoff bestehen.

FIG.1

FIG.2